# EUROPEAN PATENT SPECIFICATION

(11) **EP 2 642 331 B1**
(45) Date of publication and mention of the grant of the patent: **24.10.2018**
(21) Application number: 12160495.3
(22) Date of filing: 21.03.2012
(51) Int. Cl.: G02B 27/00, G02B 27/01, G06F 3/01, G06T 19/00

(54) **Display and Control Systems**
Anzeige und Steuersystem
Systèmes d'affichage et de commande

(43) Date of publication of application: 25.09.2013
(73) Proprietor: GE Energy Power Conversion Technology Limited, Rugby Warwickshire CV21 1BU (GB)
(72) Inventor: Cornhill, Paul James, Tamworth, West Midlands B78 3PW (GB)
(74) Representative: Serjeants LLP

(56) References cited:
- EP-A2- 1 271 293
- WO-A1-2005/066744
- WO-A1-2007/066166

## Description

### Technical Field

The present invention relates to display and control systems, and in particular to systems that can be used to provide an augmented display. In one arrangement, the display and control system can be used on marine vessels.

### Background Art

The basic idea of augmented reality is to superimpose information over a real-world environment in real-time. The real-world environment may be viewed directly by a user (i.e. by the naked eye) or in the form of an image that is captured by a suitable device such as a camera or video camera and displayed to the user. The camera can be in a portable electronic device such as mobile phone so that an image captured by the camera and displayed on the portable electronic device can then be augmented with a suitable image (including a video image) or text that is overlaid over the captured image and which provides the user with additional information. If the real-world environment is viewed directly by a user then the superimposed information is typically displayed directly in their field of vision using a suitable optical device that is worn by the user. For example, the optical device can be provided in the form of glasses or a headset and can include a substantially transparent screen on which the information is displayed so that it is superimposed on the user's view of the real-world environment, or the optical device can project the information directly onto the eye(s) of the user, e.g. using a retinal scan display or retinal projector where a focused beam of light is projected onto the retina to produce a stable and coherent image.

EP 1271293 discloses a user interface where a real world object that is visible in a view is selected and a virtual object is also displayed to the user. WO 2007/066166 discloses a method to process and display control instructions and technical information for an equipment, plant or process in an industrial facility. WO 2005/066744 discloses a system that enables a user to interact with a virtual control panel using a user controlled pointing device. The user is shown a view comprising the real world and the virtual control panel.

### Summary of the invention

The present invention provides a display and control system comprising:
an optical device worn by a user; and
a processing unit adapted to display augmented reality images to the user using the optical device, the augmented reality images being determined in real-time and with reference to the real-world environment of the user;
wherein if the augmented reality images relate to at least part of an item of equipment that is within the real-world environment of the user then the processing unit is further adapted to allow the user to control the item of equipment remotely (e.g. using body movements and/or spoken commands) and is characterised in that the augmented reality images are based on the distance of the user from the item of equipment.

The display and control system can further include means for tracking the body movements (including gestures and perhaps, with the use of a suitable optical device, eye movements) of the user within the real-world environment, e.g. sensors that are worn by the user or which allow body movements to be interpreted from captured images or full-body motion capture. Preferably more than one user within the same real-world environment can be tracked at the same time, and the display and control system can preferably distinguish between multiple users.

The display and control system can optionally include facial recognition and/or voice recognition capabilities. The optical device may incorporate a microphone for detecting spoken commands, headphones etc. However, voice recognition can also use an external microphone.

The display and control system may include an image processing unit, a data processing unit, and an interface to which data from external devices such as position and/or motion sensors, external cameras or video cameras, equipment sensors etc. can be provided.

The purpose of the display and control system is to allow a user to view additional information relating to the item of equipment (or part of the item of equipment) that needs to be monitored and/or controlled. In practice, the real-world environment of the user will typically include several items of equipment, with only the particular item of equipment that is being viewed by the user being monitored and/or controlled by the user. As described in more detail below, the display and control system will automatically determine when the augmented reality images should relate to a particular item of equipment that is within the real-world environment of the user, for example by determining when the item of equipment is within the user's field of vision, or when images that include at least part of the item of equipment are being displayed to the user. Once this determination has been made, the display and control system will allow the user to control the item of equipment remotely if they wish to do so. The user may be notified or informed when such control is possible. When controlling the item of equipment, the user can take into account the augmented reality information that is being displayed, which will typically alter in real-time to reflect any changes in the operation of the item of equipment effected by the user. The display and control system therefore provides a particularly useful synergistic relationship between the ability to display to the user technical information that relates to a particular item of equipment while at the same time allowing the user to use that technical information to control or monitor its operation. For example, if the technical information includes a rotational speed of the item of equipment then the user can control the equipment remotely to reduce or increase that rotational speed and the technical information will be updated and displayed to the user as augmented reality images to take account of the reduction or increase in the operational rotational speed of the item of equipment in real-time. This means that the user knows in real-time when the rotational speed has been reduced or increased to the new desired speed.

The display and control system, including its overall functionality, is preferably user-configurable. This would include, for example, the particular items of equipment that can be controlled, and the extent of any such control.

The augmented reality images that are displayed to the user can include images, including video images, graphics, text or any suitable combination thereof. The augmented reality images can also include images that replicate in real-time what the user is looking at if the user is not able to view the real-world environment directly.

The augmented reality images can be selected by the processing unit using one or more parameters. For example, if the optical device allows the user to view the real-world environment directly then the processing unit typically needs to know what the user is actually looking at so that it can select the appropriate augmented reality images that will be superimposed over the user's field of vision. The processing unit can determine what the user is looking at by tracking or monitoring the user's eye(s) and/or by the position or orientation of the user which can be monitored using sensors that are worn by the user, integrated into the optical device or included as part of the display and control system, e.g. installed in the room in which the item of equipment is physically located. Once the processing unit has determined that the user is looking at a particular item of equipment, or part of a particular item of equipment, then the augmented reality images that are appropriate to that item of equipment (or part thereof) can be selected and displayed to the user through the optical device. The option to allow the user to control the item of equipment that is being viewed can also be enabled. If the optical device includes a device for capturing images (e.g. a camera or video camera) that replicate the user's field of vision then those images can be processed by suitable image-recognition or image-processing software to determine what the user is looking at. Such image-recognition or image-processing software can also be used if the optical device is used to display images to the user that replicate the user's field of vision, i.e. the user does not view the real-world environment directly but only displayed images that represent the real-world environment in a way that is similar to virtual reality. For example, the captured images can be compared against stored images of items of equipment that are known to be within the real-world environment so that the particular item of equipment, or part of the particular item of equipment, can be identified by the image-recognition software and augmented reality images that are appropriate to that item of equipment can be selected and displayed to the user through the optical device. The captured images may be combined with the augmented reality images so that the images that are displayed to the user are a combination of the captured images which represent the real-world environment and the augmented reality images.

If the display and control system includes a device (e.g. a camera or video camera) for capturing images, optionally being integrated with the optical device that is worn by the user, then the captured images can be used to control, modify or adjust the size, contrast etc. of the augmented reality images before they are displayed. The captured images may be processed before being used by the processing unit for the purposes of selecting or modifying the augmented reality images that are displayed to the user. The captured images may therefore be used for a variety of different purposes, e.g. to control, modify or adjust the augmented reality images as well as, in some circumstances, being combined with or used to derive the augmented reality images or being displayed to the user by means of the optical device, with or without suitable pre-processing.

It will be readily appreciated that in terms of the real-world environment the user will just see the parts of the item of equipment that are visible to the naked eye or to any image capturing devices that use the visible spectrum, e.g. the outer housing or other external features. However, the augmented reality images that are displayed to the user can allow the user to see additional images such as technical information that has been selected by the processing unit as being relevant for that item of equipment, or the specific part of the item of equipment that the user is looking at. This additional technical information is superimposed on the image of the real-world environment to give the user an augmented reality. The additional technical information might include operational parameters such as temperature, speed (including rotational speed), pressure and other variables, and/or the thresholds for such operational parameters. For example, if the item of equipment is an electrical machine (e.g. a motor or generator) or a turbine engine then relevant additional technical information could be superimposed directly over the user's view of the outer housing of the equipment or positioned more towards the periphery of the user's field of vision where it is less intrusive. It will typically be the case that the augmented reality images should not overwhelm the user, nor should the images obstruct or interfere with the user's view of the real-world environment, but should instead complement and enhance it. Images or graphics can be superimposed directly over the user's view of the outer housing to show the user what might be happening within the actual item of equipment itself, e.g. to illustrate the movement of any moving or rotating parts, the circulation of fluids etc. The images that are provided as part of the augmented reality images can be derived from captured images from suitable devices, optionally in the non-visible spectrum such as infrared or ultraviolet which can provide enhanced information to the user. Such captured images can include images provided by a device integrated with the optical device that is worn by the user, or a device that forms part of the display and control system, e.g. installed in the room in which the item of equipment is physically located. Any captured images will normally be processed by suitable image-processing software before being displayed to the user as part of the augmented reality images. The images that are provided as part of the augmented reality images can be stored images or library images for the item of equipment, e.g. cutaways showing the various internal components or standard operating parameters.

The augmented reality images may also take the form of warning or cautionary information that is not directly related to the real-world environment in which the user is positioned, but which is nevertheless relevant to the wider environment in which the display and control system is installed, e.g. a marine vessel, platform or building. The warning or cautionary information may be derived using sensor information or control information that is used by other systems.

Different augmented reality images can be displayed if the user looks at different parts of the same item of equipment, or if the user moves closer towards, or further away from, the item of equipment. For example, general technical information about the item of equipment can be provided if the user is relatively far away from it, but more detailed or specific technical information relating to certain parts of the item of equipment can be provided as the user moves towards it. In other words, the augmented reality images can be based on the position of the user within the real-world environment (e.g. their distance from a particular item of equipment) as well as what they are looking at.

The user can optionally control the augmented reality images remotely, e.g. using body movements and/or spoken commands. This might allow the user to scroll through relevant technical information using suitable body movement or gestures, or to move the location of the augmented reality images within their field of vision. For example, if relevant technical information (including images) is being displayed then the user can optionally use body movement and/or spoken commands to control what information is displayed through the optical device and/or its location within the user's field of vision - in the centre, over an item of equipment, or at the periphery where it is less obtrusive etc. The user may also use body movements and/or spoken commands to control whether the augmented reality images are displayed or not, i.e. to turn the augmented reality image display option on or off depending on the circumstances. If augmented reality images are available then this could be notified to the user in a suitable manner. In general terms, different operating modes of the display and control system can be controlled using body movements and/or spoken commands, e.g. allowing certain keywords to be spoken by the user to toggle between a first mode where body movements control an item of equipment and a second mode where body movements control the augmented reality images that are displayed to the user.

The processing unit can be constructed as a distributed computer system and can include a plurality of individual microprocessor systems distributed around a marine vessel, platform or building, for example, at locations close to where control is required. The display and control system can be constructed for redundancy and connections between the various component parts can be either wired or wireless using any suitable connectivity standard.

The control and display system can further include a portable electronic device which can be held by the user. The portable electronic device can be used to configure and control the operation of the processing unit, to control any item of equipment, and optionally allows augmented reality images to be displayed to the user on a display screen of the device. The optical device and/or the portable electronic device may optionally be used to display captured images that do not relate to the real-world environment in which the user is situated. For example, images of other locations around the marine vessel, platform or building which might be captured by other image capturing devices such as closed-circuit television (CCTV) or the like can be displayed.

The display and control system can be installed in a marine vessel, for example. The display and control system might be used to control an item of equipment that steers or manoeuvres the marine vessel, in addition to engineering equipment such as electrical machines (e.g. motors and generators), cranes, winches, pumps, doors, actuators, valves, switches, turbines, thrusters, steering equipment, stability equipment, positioning equipment etc. The display and control system can be configured to permit the user to control the item of equipment in certain ways, e.g. to limit the control options depending on the type of equipment and other criteria.

### Drawing

Figure 1 is a schematic view of the display and control system of the present invention; and
Figure 2 is a representation of what a user of the display and control system of the present invention might see when augmented reality images are being displayed.

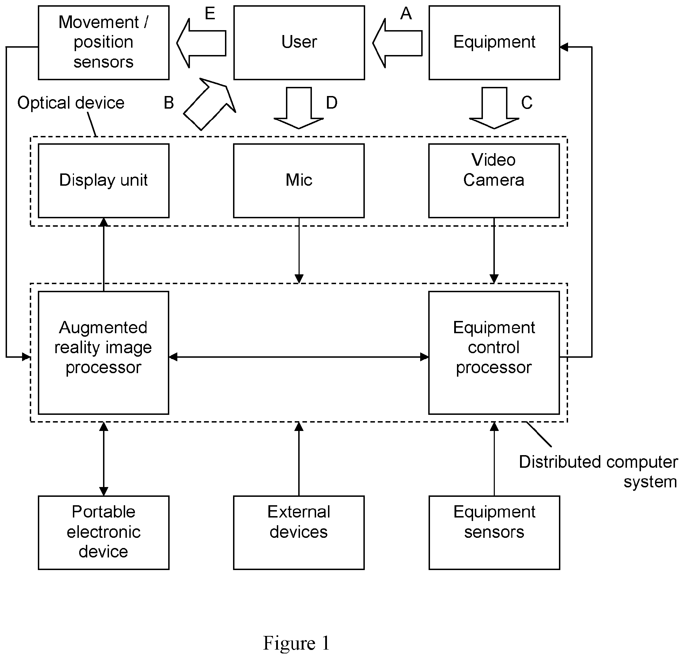

With reference to Figure 1, a display and control system includes a distributed computer system (processing unit) that generates augmented reality images and provides them to a display unit of an optical device that is worn by a user. In a first arrangement images of the real-world environment (arrow 'A') are viewed directly by a user (i.e. by the naked eye) and the display unit is adapted to display the augmented reality images (arrow 'B') directly in the user's field of vision. For example, the optical device can be provided in the form of glasses or a headset and the display unit can be a substantially transparent screen on which the information is displayed so that it is superimposed on the user's view of the real-world environment, or the display unit can be a retinal scan display or retinal projector that displays the augmented reality images directly onto the eye(s) of the user. The display unit can include an image processor for processing the augmented reality images that are received from the distributed computer system before they are displayed to the user.

Images of the real-world environment (arrow 'C') can also be captured by a suitable device such as a video camera that is provided as part of the optical device. The images captured by the video camera are supplied to the distributed computer system, processed and then supplied to the display unit of the optical device, either as a representation of the real-world environment in a similar manner to virtual reality, or as augmented reality images. In the latter case, the video camera can provide images in the non-visible spectrum (e.g. infra-red) for the purposes of providing additional technical information about the operating condition of the viewed equipment to the user.

The optical device includes a microphone which detects spoken commands (arrow 'D') to enable the user to control the distributed computer system remotely. Movement and/or position sensors enable the user to control the distributed computer system remotely using body movements, including gestures (arrow 'E').

The display and control system includes a handheld portable electronic device which the user can also use to control the distributed computer system. The portable electronic device includes a display screen on which images generated by the distributed computer system can be viewed. The microphone, the movement and/or position sensors, and the portable electronic device supply command signals to the distributed computer system.

By controlling the distributed computer system the user can control the display of the augmented reality images and any item of equipment that is connected to the distributed computer system.

The distributed computer system includes an equipment control processor that is used to control connected technical equipment in response to control commands from the user, e.g. using command signals received from the movement and/or position sensors, the microphone, or the portable electronic device. The equipment control processor enables the user to control connected equipment when the user is looking at it or a part thereof.

The distributed computer system also includes an augmented reality image processor that is used to generate the augmented reality images that are supplied to the display unit of the optical device. The augmented reality image processor can include an image mixing unit that allows different images to be combined together, e.g. augmented reality images that are generated from an external image capturing means such as a camera or video camera, stored images or library images, or images generated using data received from external equipment sensors or other devices. Signals from external devices can be provided to a suitable interface and then processed by data processing means. The augmented reality image processor can also use control signals provided by the microphone, the position and/or motion sensors, and the portable electronic device to control what augmented reality images are generated, or how they are displayed to the user.

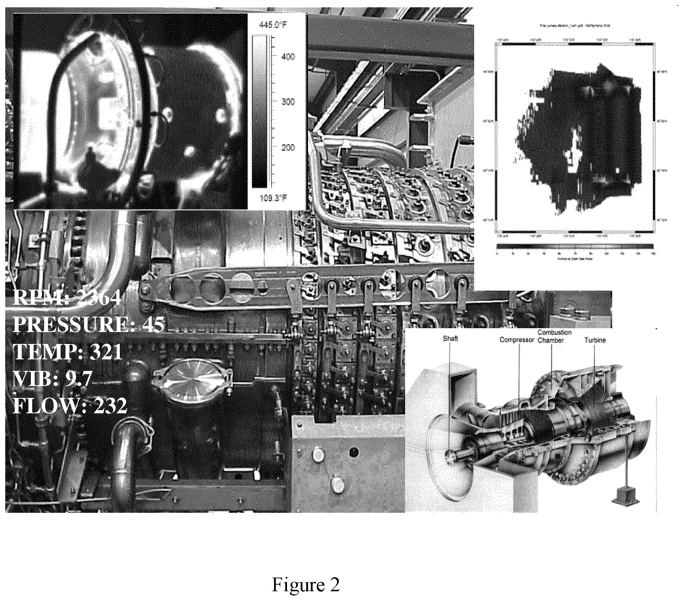

Figure 2 shows an example of what a user might see when wearing the optical device. With their naked eye the user can see a gas turbine engine which forms a background image.

The distributed computer system determines that the user is looking at the gas turbine engine, e.g. by tracking or monitoring the user's eye(s) and/or by the position or orientation of the user which can be monitored using sensors that are worn by the user, integrated into the optical device or included as part of the display and control system, e.g. installed in the room in which the gas turbine engine is physically located. The augmented reality image processor then generates augmented reality images that are appropriate to the gas turbine engine and provides them to the display unit of the optical device.

In Figure 2 four augmented reality images have been overlaid over the background image to provide the user with additional technical information about the gas turbine engine. In the bottom left-hand corner technical data about the gas turbine engine, including rpm, pressure, temperature, vibration and flow information can be seen. The technical data is derived from internal sensors associated with the gas turbine engine and is displayed as text. Data from internal sensors can also be displayed graphically as shown by the image in the top right-hand corner of the main background image or in the form of a control panel layout for the gas turbine engine similar to that which might be displayed to a user on a conventional display screen. Such data is typically provided in real-time so that the user receives accurate technical information about the prevailing status of the gas turbine engine.

A 'real-time' infra-red image of the gas turbine engine captured from an infra-red camera (optionally mounted on the optical device that is worn by the user) is displayed at the top left-hand corner of the main background image.

Finally, a library file showing a cutaway of a gas turbine engine is displayed at the bottom right-hand corner of the main background image.

The user can manage the displayed augmented reality images, e.g. by selecting and changing what is displayed through the optical device. This can be done remotely by body movement and/or voice control, for example. Augmented reality images can be superimposed over each other (and over the main background image) or placed side by side for reference and comparison purposes. The user can optionally select which augmented reality images should be displayed and where they should be positioned within the user's field of vision, e.g. having the ability to select, move, scroll, add, remove, inset, resize and rotate images, including selecting the type of data that is displayed.

As described above, the user can use the distributed computer system to control the gas turbine engine remotely while the user is looking at it. For example, the user might use gestures or spoken commands to alter the rotational speed (rpm) of the gas turbine engine, such a change being reflected immediately in the technical data derived from the internal sensors and displayed to the user as an augmented reality image. The distributed computer system can provide suitable control signals to the engine controller for the gas turbine engine, or to other control systems.

## Claims

1. A display and control system comprising:
an optical device worn by a user; and
a processing unit adapted to display augmented reality images to the user using the optical device, the augmented reality images being determined in real-time and with reference to the real-world environment of the user and relating to at least part of an item of equipment that is within the real-world environment of the user;
wherein the processing unit is further adapted to allow the user to control the item of equipment remotely; and
**characterised in that** the augmented reality images are based on the distance of the user from the item of equipment.

2. A display and control system according to claim 1, further comprising means for tracking the body movements of the user within the real-world environment.

3. A display and control system according to claim 1 or claim 2, wherein the processing unit is adapted to determine automatically when at least part of the item of equipment is within the user's field of vision.

4. A display and control system according to claim 1 or claim 2, wherein the processing means is adapted to determine automatically when images that include at least part of the item of equipment are being displayed to the user.

5. A display and control system according to any preceding claim, wherein the augmented reality images alter in real-time to reflect any changes in the operation of the item of equipment as a result of being controlled by the user.

6. A display and control system according to any preceding claim, being user-configurable.

7. A display and control system according to any preceding claim, wherein the optical device includes a device for capturing images that replicate the user's field of vision.

8. A display and control system according to claim 7, wherein the images provided by the image capturing device are processed by image-recognition or image-processing software to determine what the user is looking at.

9. A display and control system according to claim 7 or claim 8, wherein the images provided by the image capturing device are combined with the augmented reality images so that the images that are displayed to the user are a combination of the captured images which represent the real-world environment and the augmented reality images.

10. A display and control system according to any preceding claim, wherein different augmented reality images are displayed if the user looks at different parts of the same item of equipment.

11. A display and control system according to any preceding claim, wherein different augmented reality images are displayed if the user moves closer towards, or further away from, the item of equipment.

12. A display and control system according to any preceding claim, wherein the user controls the display of the augmented reality images remotely.

13. A display and control system according to any preceding claim, wherein different operating modes of the display and control system are controlled by the user using body movements and/or spoken commands.

14. A display and control system according to any preceding claim, wherein the processing unit is a distributed computer system and includes a plurality of individual microprocessor systems.

## Patentansprüche

1. Anzeige- und Steuersystem, das aufweist:
eine optische Vorrichtung, die von einem Benutzer getragen wird; und
eine Verarbeitungseinheit, die eingerichtet ist, um Augmented-Reality-Bilder für den Benutzer unter Verwendung der optischen Vorrichtung anzuzeigen, wobei die Augmented-Reality-Bilder in Echtzeit und mit Bezug auf die reale Umgebung des Benutzers bestimmt werden und wenigstens einen Teil eines Ausrüstungsgegenstandes betreffen, der sich in der realen Umgebung des Benutzers befindet;
wobei die Verarbeitungseinheit ferner eingerichtet ist, um dem Benutzer eine Fernsteuerung des Ausrüstungsgegenstandes zu ermöglichen; und
**dadurch gekennzeichnet, dass** die Augmented-Reality-Bilder auf dem Abstand des Benutzers von dem Ausrüstungsgegenstand basieren.

2. Anzeige- und Steuersystem nach Anspruch 1, das ferner Mittel zur Verfolgung der Körperbewegungen des Benutzers innerhalb der realen Umgebung aufweist.

3. Anzeige- und Steuersystem nach Anspruch 1 oder Anspruch 2, wobei die Verarbeitungseinheit eingerichtet ist, um automatisch festzustellen, wenn sich wenigstens ein Teil des Ausrüstungsgegenstandes innerhalb des Sichtfeldes des Benutzers befindet.

4. Anzeige- und Steuersystem nach Anspruch 1 oder 2, wobei die Verarbeitungseinrichtung eingerichtet ist, um automatisch festzustellen, wenn Bilder, die wenigstens einen Teil des Ausrüstungsgegenstands enthalten, dem Benutzer angezeigt werden.

5. Anzeige- und Steuersystem nach einem beliebigen vorhergehenden Anspruch, wobei die Augmented-Reality-Bilder sich in Echtzeit ändern, um jegliche Veränderungen in dem Betrieb des Ausrüstungsgegenstands infolge dessen, dass dieser durch den Benutzer gesteuert wird, wiederzugeben.

6. Anzeige- und Steuersystem nach einem beliebigen vorhergehenden Anspruch, das vom Benutzer konfigurierbar ist.

7. Anzeige- und Steuersystem nach einem beliebigen vorhergehenden Anspruch, wobei die optische Vorrichtung eine Vorrichtung zur Erfassung von Bildern enthält, die das Sichtfeld des Benutzers reproduzieren.

8. Anzeige- und Steuersystem nach Anspruch 7, wobei die durch die Bilderfassungsvorrichtung gelieferten Bilder durch eine Bilderkennungs- oder Bildverarbeitungssoftware verarbeitet werden, um festzustellen, was der Benutzer betrachtet.

9. Anzeige- und Steuersystem nach Anspruch 7 oder Anspruch 8, wobei die durch die Bilderfassungsvorrichtung gelieferten Bilder mit den Augmented-Reality-Bildern derart kombiniert werden, dass die Bilder, die für den Benutzer angezeigt werden, eine Kombination aus den erfassten Bildern, die die reale Umgebung repräsentieren, und den Augmented-Reality-Bildern sind.

10. Anzeige- und Steuersystem nach einem beliebigen vorhergehenden Anspruch, wobei verschiedene Augmented-Reality-Bilder angezeigt werden, wenn der Benutzer verschiedene Teile desselben Ausrüstungsgegenstands betrachtet.

11. Anzeige- und Steuersystem nach einem beliebigen vorhergehenden Anspruch, wobei verschiedene Augmented-Reality-Bilder angezeigt werden, wenn sich der Benutzer zu dem Ausrüstungsgegenstand näher hin oder von diesem weiter weg bewegt.

12. Anzeige- und Steuersystem nach einem beliebigen vorhergehenden Anspruch, wobei der Benutzer die Anzeige der Augmented-Reality-Bilder aus der Ferne steuert.

13. Anzeige- und Steuersystem nach einem beliebigen vorhergehenden Anspruch, wobei verschiedene Betriebsmodi des Anzeige- und Steuersystems durch den Benutzer unter Verwendung von Körperbewegungen und/oder gesprochenen Befehlen gesteuert werden.

14. Anzeige- und Steuersystem nach einem beliebigen vorhergehenden Anspruch, wobei die Verarbeitungseinheit ein verteiltes Computersystem ist und mehrere einzelne Mikroprozessorsysteme enthält.

## Revendications

1. Système d'affichage et de commande comprenant :
un dispositif optique porté par un utilisateur ; et
une unité de traitement adaptée pour afficher des images de réalité augmentée destinées à l'utilisateur du dispositif optique, les images de réalité augmentée étant déterminées en temps réel et en référence à l'environnement du monde réel de l'utilisateur et concernant au moins une partie d'une pièce d'équipement qui se trouve dans l'environnement réel de l'utilisateur ;
dans lequel l'unité de traitement est en outre adaptée pour permettre à l'utilisateur de commander la pièce d'équipement à distance ; et
**caractérisé en ce que** les images de réalité augmentée sont basées sur la distance qui sépare l'utilisateur de la pièce d'équipement.

2. Système d'affichage et de commande selon la revendication 1, comprenant en outre un moyen pour suivre les mouvements corporels de l'utilisateur dans l'environnement réel.

3. Système d'affichage et de commande selon la revendication 1 ou 2, dans lequel l'unité de traitement est adaptée pour déterminer automatiquement quand au moins une partie de la pièce d'équipement se trouve dans le champ de vision de l'utilisateur.

4. Système d'affichage et de commande selon la revendication 1 ou 2, dans lequel l'unité de traitement est adaptée pour déterminer automatiquement quand des images qui contiennent au moins une partie de la pièce d'équipement sont affichées pour l'utilisateur.

5. Système d'affichage et de commande selon l'une quelconque des revendications précédentes, dans lequel les images de réalité augmentée sont modifiées en temps réel pour refléter tout changement dans le fonctionnement de la pièce d'équipement provoqué par la commande réalisée par l'utilisateur.

6. Système d'affichage et de commande selon l'une quelconque des revendications précédentes, qui est configurable par l'utilisateur.

7. Système d'affichage et de commande selon l'une quelconque des revendications précédentes, dans lequel le dispositif optique comprend un dispositif pour capturer des images qui reproduisent le champ de vision de l'utilisateur.

8. Système d'affichage et de commande selon la revendication 7, dans lequel les images fournies par le dispositif de capture d'images sont traitées par un logiciel de reconnaissance d'image ou de traitement d'image pour déterminer ce que regarde l'utilisateur.

9. Système d'affichage et de commande selon la revendication 7 ou 8, dans lequel les images fournies par le dispositif de capture d'images sont combinées avec les images de réalité augmentée de telle manière que les images qui sont affichées pour l'utilisateur sont une combinaison des images capturées qui représentent l'environnement réel et des images de réalité augmentée.

10. Système d'affichage et de commande selon l'une quelconque des revendications précédentes, dans lequel des images de réalité augmentée différentes sont affichées si l'utilisateur regarde différentes parties de la même pièce d'équipement.

11. Système d'affichage et de commande selon l'une quelconque des revendications précédentes, dans lequel des images de réalité augmentée différentes sont affichées si l'utilisateur se rapproche ou s'éloigne de la pièce d'équipement.

12. Système d'affichage et de commande selon l'une quelconque des revendications précédentes, dans lequel l'utilisateur commande l'affichage des images de réalité augmentée à distance.

13. Système d'affichage et de commande selon l'une quelconque des revendications précédentes, dans lequel des modes de fonctionnement différents du système d'affichage et de commande sont commandés par l'utilisateur en utilisant des mouvements corporels et/ou des commandes vocales.

14. Système d'affichage et de commande selon l'une quelconque des revendications précédentes, dans lequel l'unité de traitement est un système informatique distribué et comprend une pluralité de systèmes de microprocesseurs individuels.
